# EUROPEAN PATENT SPECIFICATION

(11) **EP 3 699 579 B1**
(45) Date of publication and mention of the grant of the patent: **02.08.2023**
(21) Application number: 18856136.9
(22) Date of filing: 17.09.2018
(51) Int. Cl.: G01N 23/04

(54) **INSPECTION METHOD AND INSPECTION DEVICE AND COMPUTER-READABLE MEDIUM**
INSPEKTIONSVERFAHREN UND INSPEKTIONSVORRICHTUNG SOWIE COMPUTERLESBARES MEDIUM
PROCÉDÉ DE VÉRIFICATION ET UN DISPOSITIF DE VÉRIFICATION ET UN DISPOSITIF LISIBLE PAR ORDINATEUR

(30) Priority: 18.09.2017 CN 201710845577
(43) Date of publication of application: 26.08.2020
(73) Proprietor: Nuctech Company Limited, Beijing 100084 (CN)
(72) Inventor: GU, Jianping, Beijing 100084 (CN); LIU, Tao, Beijing 100084 (CN); ZHAO, Ziran, Beijing 100084 (CN); LIU, Yaohong, Beijing 100084 (CN); LI, Qiang, Beijing 100084 (CN)
(74) Representative: Cabinet Beau de Loménie
(86) International application number: PCT/CN2018/106021
(87) International publication number: WO 2019/052561

(56) References cited:
- EP-A1- 3 611 666
- CN-A- 103 917 862
- CN-A- 104 165 896
- CN-A- 106 706 677
- CN-A- 107 145 910
- US-A1- 2011 206 240
- US-A1- 2017 098 153
- THOMAS W ROGERS ET AL: "Automated X-ray Image Analysis for Cargo Security: Critical Review and Future Promise", ARXIV.ORG, CORNELL UNIVERSITY LIBRARY, 201 OLIN LIBRARY CORNELL UNIVERSITY ITHACA, NY 14853, 3 August 2016 (2016-08-03), XP080717884,

## Description

### TECHNICAL FIELD

The present application relates to security inspection, and more particularly, to a radiographic imaging based inspection method and inspection device and a computer readable medium.

### BACKGROUND

At present, the logistics industry is playing an increasingly important role. Logistics would play a vital role in both the rise of the "all-people online shopping" trend and the "One Belt, One Road" policy proposed by the state. However, some criminals make use of the convenience of logistics to falsely declare items to be delivered, and actually mail prohibited substances such as drugs, explosives, firearms etc. This poses a huge threat to social security.

Article 85 of the Chinese Anti-Terrorism Law stipulates that "if logistics operating units such as cargo transportation units, postal and express delivery units etc. by railway, highway, water and air fail to implement a security inspection regulation to check identities of customers, or fail to carry out security inspections or unsealed inspections on items to be transported or delivered in accordance with regulations, or fail to implement a regulation of registering identities of customers who possess items to be transported or delivered and information of the items to be transported or delivered, these logistics operating units shall be punished." This requires express delivery companies to guarantee the implementation of regulations such as the "100% inspection before sealing", "100% real-name registration system", "100% security inspection using an X-ray machine" etc.

In this case, if a manual inspection method is applied to confirm whether declaration information is consistent with real items, it may inevitably lead to a lot of waste of resources and inefficiency. The manual inspection may also cause great pressure on inspectors.

The European patent application No.18785106 discloses an inspection device and an inspection method.

The paper "Automated X-ray Image Analysis for Cargo Security: Critical Review and Future Promise" by Thomas W. Rogers et al. reviews the relatively immature field of automated image analysis for X-ray cargo imagery.

The US patent application No. 15/166,177 discloses a multimodal recurrent neural network model for generating novel image captions.

### SUMMARY

In view of one or more problems in the related art, the embodiment of the present disclosure propose an inspection method, an inspection device and a computer readable medium, which may automatically inspect an inspected object, thereby greatly improving a speed of the inspection while ensuring accuracy of the inspection. The invention is defined by the appended set of claims.

In an aspect of the present disclosure, there is proposed an inspection method according to appended claim 1.

According to an embodiment of the present disclosure, the first neural network is trained using a pre-established set of image-semantics pairs.

According to an embodiment of the present disclosure, before processing the image using the first neural network, the method further comprises steps of:
binarizing the image of the inspected object;
calculating an average value of the binarized image; and
subtracting the average value from each pixel value of the binarized image.

According to an embodiment of the present disclosure, the steps of determining whether the inspected object is allowed to pass based on the semantic description and the semantic feature comprises:
calculating a distance between a first vector representing the semantic description and a second vector representing the semantic feature; and
allowing the inspected object to pass if the calculated distance is less than a threshold.

According to an embodiment of the present disclosure, a correspondence relationship is established between a plurality of region features contained in sample images and a plurality of words included in manifest information of the sample images during training of the first neural network.

According to an embodiment of the present disclosure, a dot product between a feature vector representing the region features and a semantic vector representing the words is taken as similarities between the region features and the words, and a weighted sum of the similarities between the plurality of region features of the sample images and the plurality of words included in the manifest information of the sample images is taken as a similarity between the sample images and the manifest information of the sample images.

In another aspect of the present disclosure, there is proposed an inspection device according to appended claim 8.

In yet another aspect of the present disclosure, there is proposed a computer readable medium having stored therein a computer program which, when executed by a processor, implements the following steps:
processing an X-ray image of an inspected object using a first neural network to obtain a semantic description of the inspected object;
processing text information of a manifest of the inspected object using a second neural network to obtain a semantic feature of the inspected object; and determining whether the inspected object is allowed to pass based on the semantic description and the semantic feature.

With the solutions according to the above embodiments, a speed of the inspection may be greatly improved while accuracy of the inspection is ensured, so that efficiency of the security inspection is greatly improved.

### BRIEF DESCRIPTION OF THE DRAWINGS

For better understanding the present disclosure, the present disclosure will be described in detail according to the accompanying drawings below.
Fig. 1 illustrates a schematic diagram of an inspection device according to an embodiment of the present disclosure;
Fig. 2 illustrates a schematic diagram of an internal structure of a computer for image processing in the embodiment shown in Fig. 1;
Fig. 3 is a schematic diagram illustrating an artificial neural network used in an inspection device and inspection method according to an embodiment of the present disclosure;
Fig. 4 illustrates a schematic diagram of another artificial neural network used in an inspection device and inspection method according to an embodiment of the present disclosure;
Fig. 5 is a schematic diagram illustrating a process of aligning images with semantics according to an embodiment of the present disclosure;
Fig. 6 is a flowchart illustrating establishment of an image-semantics model in an inspection device and inspection method according to an embodiment of the present disclosure; and
Fig. 7 is a flowchart illustrating a process of performing security inspection on an inspected object using an inspection method according to an embodiment of the present disclosure.

### DETAILED DESCRIPTION

The specific embodiments of the present disclosure will be described in detail below. It should be noted that the embodiments herein are used for illustration only, without limiting the present disclosure. In the description below, a number of specific details are explained to provide better understanding of the present disclosure. However, it is apparent to those skilled in the art that the present disclosure may be implemented without these specific details. In other instances, well known circuits, materials or methods are not described specifically so as not to obscure the present disclosure.

In view of the problem of inefficiency of the inspection in the related art, a deep learning-based inspection technique is proposed in the embodiments of the present disclosure, which may intelligently complete comparison between an image and a declaration of an item machine. With the solutions according to the embodiments of the present disclosure, a region in an item image of the item machine which is inconsistent with customs declaration data of an item declaration may be found. Items in this region may be a falsely declared or concealed. The false declaration is generally related to prohibited items in logistics cargoes or dangerous items that threaten the security of logistics transportation, which are described as safe cargoes to be transported in the customs declaration in order to avoid inspection. The concealment is generally related to items with a low quantity and a small volume, and is also known as entrainment, which is a commonly used means of smuggling prohibited items.

In addition, in a scanned image of the item machine, a problem of one box containing multiple items in logistics cargoes is a difficult problem which may not be solved in conventional image processing conditions. To be precise, it is an ambiguous complex segmentation problem under the supervision of the customs declaration data which is affected by inconsistency between devices. For example, an algorithm may inevitably have different performances for different devices, the customs declaration data provides multiple supervised values (such as a number of types of cargoes, specific respective types, and a unit weight etc.), and each pixel on an image may belong to multiple cargoes, etc. The method according to the present disclosure solves the problem using a deep learning-based method. No matter how many types of items are in a box, without manual selection of features, a trained image model and a trained semantics model may be obtained by a convolution neural network using large-scale training data, and corresponding image semantic description may further be generated for a test picture, so as to accurately complete comparison between an image and a declaration of one box containing multiple cargoes.

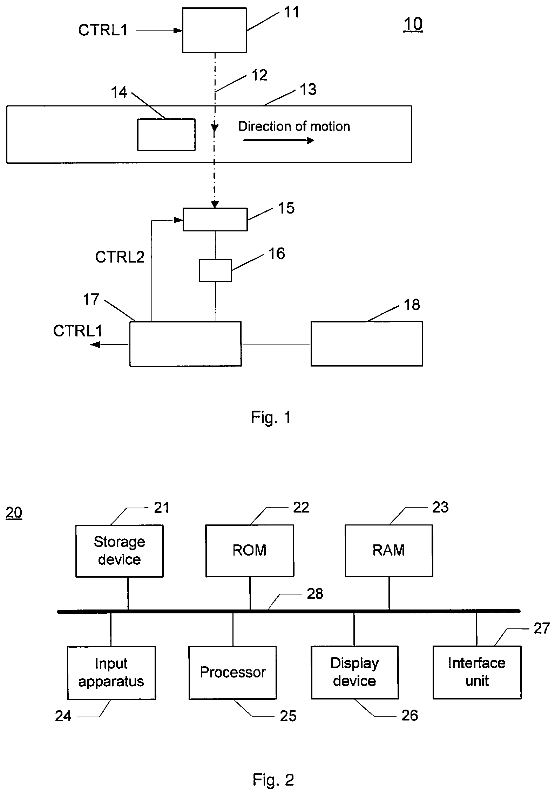

Fig. 1 illustrates a schematic structural diagram of an inspection device according to an embodiment of the present disclosure. The inspection device 10 shown in Fig. 1 comprises an X-ray source 11, a detector module 15, a collection circuit 16, a controller 17, and a data processing computer 18 etc. The ray source 11 comprises one or more X-ray generators which may perform single-energy transmission scanning or dual-energy transmission scanning.

As shown in Fig. 1, an inspected object 14, such as a luggage item etc., is placed on a conveyor belt 13 and passes through a scanning region between the ray source 11 and the detector module 15. In some embodiments, the detector module 15 and the collection circuit 16 are, for example, detectors and data collectors having an integral modular structure, such as multiple rows of detectors, which are used for detecting rays transmitted through the inspected object 14 to obtain an analog signal, and converting the analog signal into a digital signal, thereby outputting a transmission image of the inspected object 14 for the X-rays. In a case of dual energy, for example, one row of detectors may be provided for high-energy rays, and another row of detectors may be provided for low-energy rays, or the same row of detectors may be used for both the high-energy rays and the low-energy rays in a time division manner. The controller 17 is used to control various parts of the entire system to work synchronously. The data processing computer 18 is used to process data collected by the collection circuit 16 so as to process the image data, and output results. For example, the data processing computer 18 runs an image processing program, analyzes and learns the scanned image to obtain a semantic description of the image, and then compares the obtained semantic description with a semantic feature included in manifest information of the luggage item to determine whether declaration information is consistent with an object in the luggage item. In a case of consistency, the luggage item is allowed to pass; otherwise, a warning is issued to remind a security person that the luggage item may have a problem.

According to the embodiment, the detector module 15 and the collection circuit 16 are used to acquire transmission data of the inspected object 14. The collection circuit 16 comprises a data amplification shaping circuit, which may operate in a (current) integration mode or a pulse (counting) mode. A data output cable of the collection circuit 16 is connected to the controller 17 and the data processing computer 18, and the collected data is stored in the data processing computer 18 according to a trigger command.

In some embodiments, the detector module 15 comprises a plurality of detection units which receive X-rays transmitted through the inspected object 14. The collection circuit 16 is coupled to the detector module 15 to convert a signal generated by the detector module 16 into detection data. The controller 17 is connected to the ray source 11 via a control line CTRL1, is connected to the detector module 15 via a control line CTRL2, and is connected to the collection circuit 16, to control one or more X-ray generators in the ray source 11 to perform single-energy scanning or dual-energy scanning on the inspected object 14, so that the emitted X-rays are transmitted through the inspected object 14 as the inspected object 14 moves. In addition, the controller 17 controls the detector module 15 and the collection circuit 16 to obtain corresponding transmission data, such as single-energy transmission data or dual-energy transmission data. The data processing computer 18 obtains an image of the inspected object 14 based on the transmission data, processes the image, and determines whether the image is consistent with the manifest information of the inspected object 14 based on the manifest information of the inspected object 14.

Fig. 2 illustrates a structural block diagram of the data processing computer shown in Fig. 1. As shown in Fig. 2, the data processing computer 20 comprises a storage device 21, a Read Only Memory (ROM) 22, a Random Access Memory (RAM) 23, an input apparatus 24, a processor 25, a display device 26, an interface unit 27, and a bus 28 etc.

The data collected by the collection circuit 16 is stored in the storage device 21 via the interface unit 27 and the bus 28. Configuration information and a program of the data processor of the computer are stored in the ROM 22. The RAM 23 is used to temporarily store various data during the operation of the processor 25. In addition, a computer program for performing data processing is also stored in the storage device 21. The internal bus 28 is used to connect the storage device 21, the read only memory 22, the random access memory 23, the input apparatus 24, the processor 25, the display device 28, and the interface unit 27 as described above.

After a user inputs an operation command through the input apparatus 24 such as a keyboard and a mouse etc., an instruction code of the computer program instructs the processor 25 to execute a data processing algorithm. After a data processing result is obtained, the data processing result is displayed on the display device26, such as an LCD display or the processing result is directly output in a form of hard copy such as printing.

For example, the ray source 11 may be a radioactive isotope (such as cobalt-60), or may also be a low-energy X-ray machine or a high-energy X-ray accelerator etc.

For example, the detector module 15 may be divided into gas detectors, scintillation detectors or solid detectors according to materials, or may also be divided into a single row of detectors, dual rows of detectors or multiple rows of detectors, or into a single layer of detectors or dual layers of high-energy and low-energy detectors according to an array arrangement etc.

In the above description, the inspected object 14, such as a luggage item, moves through an inspection region via the conveyor belt 13. However, it should be appreciated by those skilled in the art that the scanning process may also be completed by moving the ray source and the detector array while the inspected object 14 is stationary.

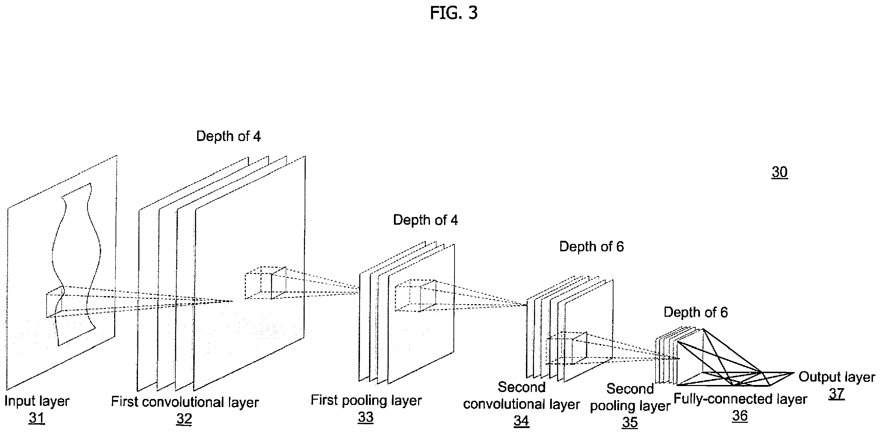

In order to identify a feature in the transmission image, the embodiments of the present disclosure propose to use a Convolutional Neural Network (CNN) to identify the feature in the image. A convolutional neural network 30 according to an embodiment of the present disclosure will be described in detail below in combination with Fig. 3. Fig. 3 is a schematic diagram illustrating the convolutional neural network 30 according to the embodiment of the present disclosure. The convolutional neural network 30, as shown in Fig. 3, may generally comprise a plurality of convolutional layers 32 and 34, which are generally collections of small neurons (which are also referred to mathematically as convolution kernels, wherein the two terms "small neurons" and "convolution kernels" may be used interchangeably unless otherwise stated) that partially overlap each other. In addition, in the context of the present disclosure, unless explicitly stated otherwise, for any two layers of the convolutional neural network 30, one layer closer to input data (or an input layer, such as an input layer 31 of Fig. 3) is referred to as a "front" or "lower" layer; and the other layer closer to output data (or an output layer, such as an output layer 37 of Fig. 3) is referred to as a "back" or "upper" layer. In addition, during training, verification and/or usage, a direction from the input layer (for example, the input layer 31 of Fig. 3) to the output layer (for example, the output layer 37 of Fig. 3) is referred to as an ahead or forward direction, and a direction from the output layer (for example, the output layer 37 of Fig. 3) to the input layer (for example, the input layer 31 of Fig. 3) is referred to as a reverse or backward direction.

By taking the first convolutional layer 32 shown in Fig. 3 as an example, small neurons in the first convolutional layer 32 may process various local parts of the input image. Outputs of these small neurons are then combined and arranged into one output (referred to as a feature map, such as a square in the first convolutional layer 32) so as to obtain an output image which better represents certain features in the original image. At the same time, the partially overlapping arrangement between the adjacent neurons also causes the convolutional neural network 30 to have a degree of translational tolerance for the features in the original image. In other words, the convolutional neural network 30 may also correctly identify a feature in the original image even if a position of the feature changes in a translational manner within a certain tolerance. A detailed description of the convolutional layer will be given later and will not be discussed in detail here.

A next layer is an optional pooling layer, i.e., a first pooling layer 33, which is mainly used to downsample the output data of the previous convolutional layer 32 while maintaining the features, so as to reduce a calculation amount and prevent over-fitting.

A next layer is also a convolutional layer, i.e., a second convolutional layer 34, which may perform further feature sampling on output data which is obtained by downsampling data generated by the first convolutional layer 32 via the pooling layer 33. Intuitively, the features learned by the second convolutional layer 34 are globally greater than those learned by the first convolutional layer. Similarly, each of subsequent convolutional layers is global to features of a previous convolutional layer.

The convolutional layers (for example, the first convolutional layer 32 and second convolutional layer 34) are core building units of the CNN (for example, the convolutional neural network 30). Parameters of each of the layers consist of a collection of learnable convolution kernels (or simply called convolution kernels) each of which has a small receptive field, but extends over the entire depth of the input data. In a forward process, each convolution kernel is convolved along a width and a height of the input data. A dot product between elements of the convolution kernel and the input data is calculated, and a two-dimensional activation map of the convolution kernel is generated. As a result, the network is able to learn the convolution kernel which may be activated only when a particular type of features is seen at a spatial position of the input.

Activation maps of all convolution kernels are stacked in a depth direction to form full output data of the convolutional layers. Thus, each element in the output data may be interpreted as an output of a convolution kernel which sees small regions in the input and shares parameters with other convolution kernels in the same activation map.

A depth of output data controls a number of convolution kernels in the same region of the layer which are connected to the input data. For example, as shown in Fig. 3, a depth of the first convolutional layer 32 is 4, and a depth of the second convolutional layer 34 is 6. All of these convolution kernels will learn to be activated for different features in the input. For example, if the first convolutional layer 32 uses the original image as an input, different convolution cores (i.e., different squares in Fig. 3) along the depth dimension may be activated when various directional edges or gray blocks appear in the input data.

The training process is a very important part of deep learning. In order to ensure that the network may effectively converge, a stochastic gradient descent method may be used. For example, the Nesterov optimization algorithm may be used to solve the problem. In some embodiments, an initial learning rate may be set to start at 0.01 and gradually decreases until an optimal value is found. In addition, in some embodiments, for initial values of weights, a Gaussian random process with a small variance may be used to initialize weight values of the respective convolution kernels. In some embodiments, tagged item images, which are tagged with positions of features in the images, may be used as an image training set.

According to an embodiment of the present disclosure, a dense picture description is generated on a picture using the Convolution Neural Network (CNN) as shown in Fig. 3 to characterize information of items in the image of the item machine. In particular, when image features are extracted using a convolutional neural network model, an extraction method using a candidate region-based convolutional neural network or a fast candidate region-based convolutional neural network (Faster-RCNN) may be used. For example, a dense picture description is generated on a picture using a CNN to characterize information of items in an image of a small item machine. Since a sentence description of the picture is often related to objects in the picture and attributes thereof, according to the invention objects are detected in each picture using a Region Convolutional Neural Network (RCNN). Detection is performed in the entire picture to obtain a series of items and confidence levels thereof. First ten detection positions in a descending order of confidence levels are used, and a picture representation is calculated according to all the pixels in each boundary box. It should be understood by those skilled in the art that other artificial neural networks may be used to identify and learn the features in transmission image. The embodiments of the present disclosure are not limited thereto.

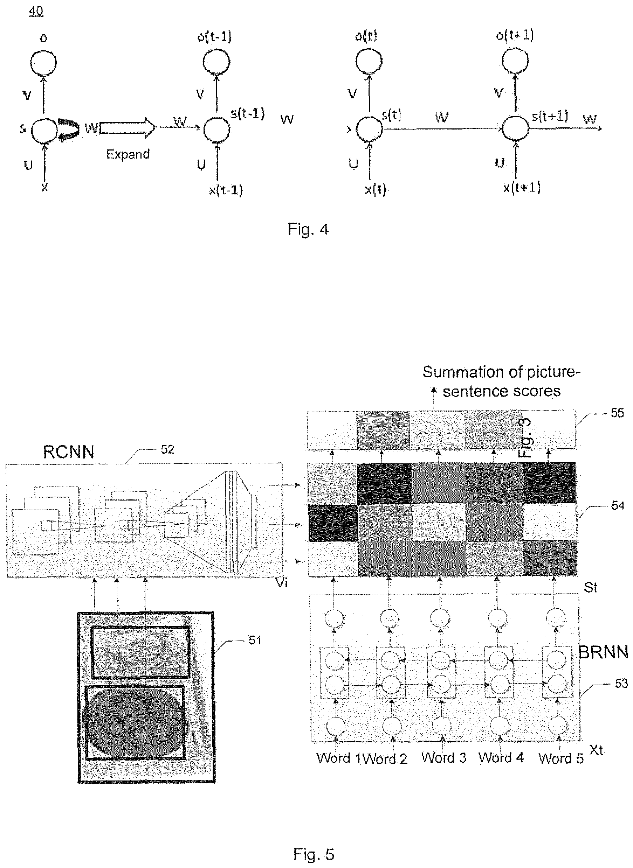

In order to learn manifest information or determine information included in the manifest, a Recurrent Neural Network (RNN) which is suitable for natural language learning is used in the embodiments of the present disclosure. Fig. 4 illustrates a schematic diagram of an artificial neural network used in an inspection device and inspection method according to an embodiment of the present disclosure.

As shown in Fig. 4, the RNN usually comprises input units, of which an input set is marked as {x₀,x₁,...,xₜ,xₜ₊₁,...}, and an output set of output units is marked as {y₀, y₁,..., yₜ, yₜ₊₁.,..}. The RNN further comprises hidden units, of which an output set is marked as {s₀, s₁,..., sₜ, sₜ₊₁,...}, and these hidden units finish the most important work. In Fig. 4, a one-way information flow is from the input units to the hidden units, while another one-way information flow is from the hidden units to the output units. In some cases, the RNN breaks the restriction of the latter and guides information back from the output units to the hidden units, which is called "back projections". Further, an input of a hidden layer also comprises a state of a previous hidden layer, that is, nodes in a hidden layer may be self-connected or interconnected.

As shown in Fig. 4, the recurrent neural network is expanded into a full neural network. For example, for a sentence containing five words, the expanded network is a five-layer neural network, with each layer representing a word.

In this way, the natural language is converted into symbols which may be recognized by a machine, wherein it is convenient to digitalize the symbols in the process of machine learning. Since words are the basis of understanding and processing the natural language, it is necessary to digitalize the words. The embodiments of the present disclosure propose to use a word vector (i.e., word representation). The word vector refers to a real vector V having a specified length to represent a word. A one-hot vector may be used to represent a word, that is, a vector of |V| * 1 is generated according to a number |V| of words. When a certain bit is 1, all the other bits are 0, and then this vector represents a word.

In the RNN, during each input step, parameters U, V and W are shared by respective layers, which reflects that for each step, the same operations are performed in the RNN except for different inputs, thus greatly reducing parameters needed to be learned in the network.

The improvement of the bidirectional RNN as compared with the RNN is that a current output (an output of a t^{th} step) not only relates to a previous sequence, but also relates to a subsequent sequence. For example, in order to predict missing words in a sentence, it is necessary to predict the words according to a context. The bidirectional RNN is a relatively simple RNN consisting of two RNNs stacked one on top of the other. An output of the bidirectional RNN is determined by states of the hidden layers of the two RNNs.

In an embodiment of the present disclosure, a RNN model is used for customs declaration information or express order item information corresponding to an image, as shown in Fig. 4. For example, in the embodiment of the present disclosure, a method using a bidirectional RNN (BRNN) is used. A sequence of n words is input to the BRNN, wherein each word is encoded using one-hot, so that the word is converted into a fixed h-dimensional vector. Since a context around the word having a variable length is used, expressions of the word are enriched. It should be understood by those skilled in the art that other artificial neural networks may be used to identify and learn features in the manifest information. The embodiments of the present disclosure are not limited thereto.

According to an embodiment of the present disclosure, an inspection process involves three parts: 1) establishing a database of scanned images and corresponding semantic information of the customs declaration; 2) establishing an image model of a luggage item and a corresponding semantics model; and 3) establishing an image-declaration comparison model to complete intelligent checking of images and declarations. The database of the scanned images and corresponding semantic information of the customs declaration comprises three parts which are image collection, image preprocessing and sample preprocessing.

The database of the images and corresponding semantic information of the customs declaration is mainly divided into three parts which are image collection, image preprocessing and sample preprocessing. The establishment process is as follows. (1) Image acquisition: a considerable number of images of items scanned by the item machine are collected, so that the image database comprises images of various items. It should be illustrated that the images comprise normal items and prohibited items at this time. (2) Image preprocessing: the scanned images contain noise information, and may be pre-processed. Since binary images have a uniform physical resolution and may be used conveniently in combination with a variety of algorithms, the present disclosure uses binary images. It should be illustrated that in order to ensure generalization of the model, a mean of all the images may be subtracted from each image.

For example, a considerable number of images of items scanned by the item machine are collected so that the image database contains images of various items. It should be illustrated that the images comprise normal items and prohibited items at this time. Then, the scanned images have noise information and need to be pre-processed. Since binary images have a uniform physical resolution and may be used conveniently in combination with a variety of algorithms, the present disclosure uses binary images. After the binary images are obtained, an average grayscale level of the images is calculated. In order to ensure generalization of the model, a mean of all the images is subtracted from each image to obtain a result as an image input of the model.

According to an embodiment of the present disclosure, samples are annotated using semantic information of the customs declaration. The images and the semantic information form a complete pair of information to facilitate network training. It should be illustrated that the semantic information here further comprises item information described in an express delivery sheet etc. For example, the samples are annotated using the semantic information of the customs declaration. The images and the semantic information form a complete pair of information to facilitate network training. In order to keep the model sensitive to keywords, it is necessary to process non-key words in the item description, for example, delete non-item keywords such as "one", "one type" etc.

A process of establishing an image-declaration comparison model is shown in Fig. 5. An intrinsic mode correspondence relationship between language and visual data is learned based on a data set composed of pictures and corresponding sentence descriptions thereof. As shown in Fig. 5, the method according to the present disclosure aligns inputs in two modes by a multimode encoding model based on a new model combination approach and also based on a structured purpose.

Image features are aligned with semantic features by the multimode encoding model, and image-declaration comparison models, that is, RCNN 52 and BRNN 53 as shown in Fig. 5, are finally obtained by stochastic gradient descent training. For example, if a result of the calculation is that an image corresponds to semantic information of a declared item, the item automatically passes through the item machine. If the result of the calculation is that the image does not correspond to the semantic information of the declared item, the item machine issues a warning to prompt the staff that there are abnormalities, and corresponding processing should be conducted. In the present disclosure, the model is required to be independent of assumptions, such as special hard-coded models, rules, or categories, but is only learned from training corpora.

In this way, the language description of the picture is treated as a weak annotation using the large number of (picture-sentence) data sets. The consecutively segmented words in these sentences correspond to some special but unknown positions in the picture. These "alignments" are inferred using the neural networks 52 and 53 and are applied to learn a description generation model. Specifically, as described above, the present disclosure uses a deep neural network model which may infer a potential alignment relationship between segmented sentences and corresponding description picture regions thereof. Such model links the two modes together by a common multimode encoding space and a structured purpose. Multimode recursive neural network architecture is used, wherein an image is input to the multimode recursive neural network architecture to generate a corresponding text description. Keyword matching is performed between the generated picture description and the image annotation information to determine a similarity between the generated sentence description and the annotation information. Experiments have shown that the generated text description sentence is significantly better than that based on a retrieval method. The model is trained based on the inferred correspondence relationship, and its effect is tested using a new data set with partial annotations.
As shown in Fig. 5, the image features are aligned with the semantic features by a multimode encoding model. The image-declaration comparison model is finally obtained by stochastic gradient descent training.
For example, each scanned picture of a small item machine and a corresponding description sentence may be converted into a common h-dimensional vector set using the established RCNN 52 and BRNN 53. Since the supervised corpus has a granularity of the entire picture and the entire sentence, (picture-sentence) may be seen as a function of (region-word) scores. Intuitively, a (picture-sentence) combination should get a higher matching score if a certain word thereof has sufficient object or attribute support in the picture. A dot product between a vector Vᵢ of an i^{th} picture region and sₜ of a t^{th} word vector is interpreted as a measure of a similarity, and is used to further define a score between the picture and the sentence. The higher the score, the higher the correspondence degree between the image and the customs declaration.

In this way, a complete (picture-semantics) model may be obtained by training. In addition, in an actual inspection process, a difference between a generated semantic description and a semantic description of a real item may also be considered as part of a loss function. In the inspection process, after a processed picture is input according to the trained model, a semantic description corresponding to the picture may be obtained, and then is matched with a real customs declaration to obtain a confidence level which may be used to determine whether the picture is consistent with the declaration.

According to an embodiment of the present disclosure, in a training process of a neural network, a correspondence relationship is established between a plurality of region features contained in sample images and a plurality of words included in manifest information of the sample pictures. For example, a dot product between a feature vector representing the region features and a semantic vector representing the words is taken as a similarity between the region features and the words, and a weighted sum of similarities between the plurality of region features of the sample images and the plurality of words included in the manifest information is taken as a similarity between the sample images and the manifest information.

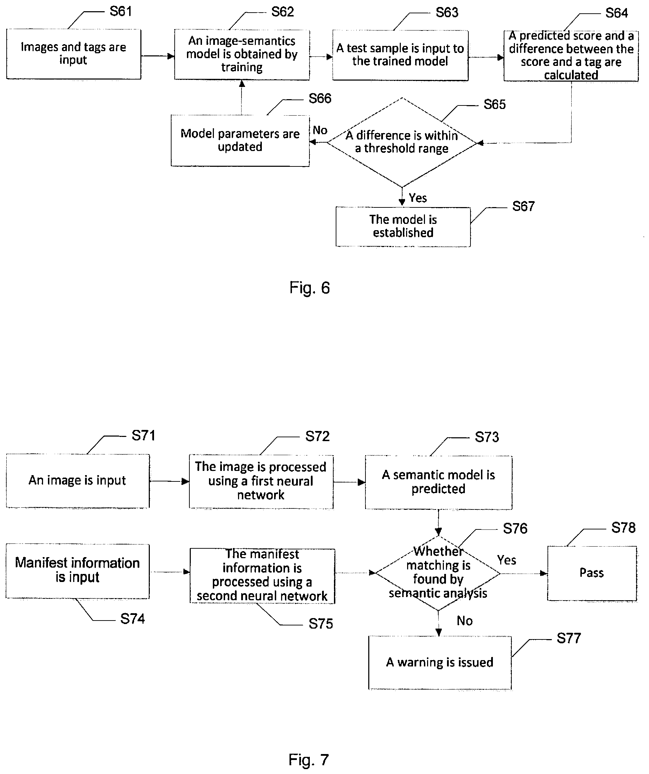

Fig. 6 is a flowchart illustrating establishment of an image-semantics model in an inspection device and inspection method according to an embodiment of the present disclosure. As shown in Fig. 6, in step S61, pre-prepared tagged images are input into the convolutional neural network 30 for training. In step S62, a trained image-semantics model is obtained, that is, a preliminarily trained convolutional neural network. In order to improve the accuracy of the model, a test picture is input to test the network in step S63, and a predicted score and a difference between the predicted score and a tag are calculated in step S64, for example, the test picture is input into the neural network to obtain a predicted semantic description and a difference between the semantic description and the tag. For example, if the semantic description and the tag are represented by two vectors respectively, a difference between the two vectors is used to represent a difference between the semantic description and the tag. In step S65, it is determined whether the difference is less than a threshold, and if the difference is greater than the threshold, the network is modified by updating network parameters in step S66; and if the difference is less than the threshold, a network model is established in step S67, that is, training of the network ends.

Fig. 7 is a flowchart illustrating a process of performing security inspection on an inspected object using an inspection method according to an embodiment of the present disclosure.

In an actual security inspection process, in step S71, the inspected object 14 is scanned using the inspection device shown in Fig. 1 to obtain a transmission image of the inspected object. In step S74, manifest information of the inspected object is input to the data processing computer 18 manually or using a barcode scanner or by other means. In the data processing computer 18, in step S72, the transmission image is processed using a first neural network, such as a convolutional neural network or RCNN etc., and in step S73, a semantic description of the inspected object is obtained. In step S75, text information of the manifest is processed using a bidirectional recurrent neural network so as to obtain a semantic feature of the inspected object. Then, in step S76, it is determined whether the semantic feature is consistent with the semantic description obtained from the image, and if not, a warning is issued in step S77; and if so, the inspected object is allowed to pass in step S78. According to some embodiments, a distance between a first vector representing the semantic description and a second vector representing the semantic feature may be calculated, and then the inspected object is allowed to pass if the calculated distance is less than a threshold. The distance between the two vectors here may be represented by a sum of absolute values of differences between elements of the two vectors, or by a Euclidean distance between the two vectors. The embodiments of the present disclosure are not limited thereto.

With the method for image processing and deep learning, the present disclosure realizes intelligent checking of whether the declared items are consistent with the actual items. On the one hand, it may greatly improve work efficiency to achieve the effect of "quick access"; and on the other hand, it may also reduce side effects of various subjective factors to achieve the effect of "manageable", and the method according to the present disclosure is currently an important means for intelligent security inspection and has great market potential.
The foregoing detailed description has set forth various embodiments of the inspection method and the inspection device via the use of diagrams, flowcharts, and/or examples. In a case that such diagrams, flowcharts, and/or examples contain one or more functions and/or operations, it will be understood by those skilled in the art that each function and/or operation within such diagrams, flowcharts or examples may be implemented, individually and/or collectively, by a wide range of structures, hardware, software, firmware, or virtually any combination thereof. In one embodiment, several portions of the subject matter described in the embodiments of the present disclosure may be implemented via Application Specific Integrated Circuits (ASICs), Field Programmable Gate Arrays (FPGAs), Digital Signal Processors (DSPs), or other integrated formats. However, those skilled in the art will recognize that some aspects of the embodiments disclosed herein, in whole or in part, may be equivalently implemented in integrated circuits, as one or more computer programs running on one or more computers (for example, as one or more programs running on one or more computer systems), as one or more programs running on one or more processors (for example, as one or more programs running on one or more microprocessors), as firmware, or as virtually any combination thereof, and that designing the circuitry and/or writing the code for the software and/or firmware would be well within the skill of those skilled in the art in ray of the present disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Versatile Disk (DVD), a digital tape, a computer memory, etc.; and a transmission type medium such as a digital and/or an analog communication medium (for example, a fiber optic cable, a waveguide, a wired communications link, a wireless communication link, etc.).

While the present disclosure has been described with reference to several typical embodiments, it is apparent to those skilled in the art that the terms are used for illustration and explanation purpose and not for limitation. The present disclosure may be practiced in various forms without departing from the spirit or essence of the present disclosure. It should be understood that the embodiments are not limited to any of the foregoing details, and shall be interpreted broadly within the spirit and scope as defined by the following claims. Therefore, all of modifications and alternatives falling within the scope of the claims are to be encompassed by the claims as attached.

## Claims

1. An inspection method, comprising steps of:
scanning an inspected object (14) using X-rays to obtain an image of the inspected object (14);
processing the image using a first neural network (52) to obtain a semantic description of the inspected object (14);
reading text information of a manifest of the inspected object (14);
processing the text information of the manifest of the inspected object (14) using a second neural network (53) to obtain a semantic feature of the inspected object (14); and
determining whether the inspected object (14) is allowed to pass based on the semantic description and the semantic feature,
**characterized in that**, the first neural network (52) comprises a region convolutional neural network, and the step of processing the image comprises:
using the region convolutional neural network to detect objects in the image and to obtain confidence levels of the objects; and using detection positions of a preset number of objects whose confidence levels are higher than those of other objects detected in the image to calculate a picture representation according to all pixels in each boundary box.

2. The method according to claim 1, wherein the first neural network (52) is a candidate region-based convolutional neural network or a fast candidate region-based convolutional neural network, and the second neural network (53) is a recurrent neural network or a bidirectional recurrent neural network.

3. The method according to claim 1, wherein the first neural network (52) is trained using a pre-established set of image-semantics pairs.

4. The method according to claim 1, wherein before processing the image using the first neural network (52), the method further comprises steps of:
binarizing the image of the inspected object (14);
calculating an average value of the binarized image; and
subtracting the average value from each pixel value of the binarized image.

5. The method according to claim 1, wherein the steps of determining whether the inspected object (14) is allowed to pass based on the semantic description and the semantic feature comprises:
calculating a distance between a first vector representing the semantic description and a second vector representing the semantic feature; and
allowing the inspected object (14) to pass if the calculated distance is less than a threshold.

6. The method according to claim 1, wherein a correspondence relationship is established between a plurality of region features contained in sample images and a plurality of words included in manifest information of the sample images during training of the first neural network (52).

7. The method according to claim 6, wherein a dot product between a feature vector representing the region features and a semantic vector representing the words is taken as similarities between the region features and the words, and a weighted sum of the similarities between the plurality of region features of the sample images and the plurality of words included in the manifest information of the sample images is taken as a similarity between the sample images and the manifest information of the sample images.

8. An inspection device (10), comprising:
a scanning apparatus configured to scan an inspected object (14) using X-rays to obtain a scanned image;
an input apparatus configured to input information of a manifest of the inspected object (14); and
a processor (18) configured to:
process the image using a first neural network (52) to obtain a semantic description of the inspected object (14);
process text information of the manifest of the inspected object (14) using a second neural network (53) to obtain a semantic feature of the inspected object (14); and
determine whether the inspected object (14) is allowed to pass based on the semantic description and the semantic feature,
**characterized in that**, the first neural network (52) comprises a region convolutional neural network, and the processor (18) is further configured to:
use the region convolutional neural network to detect objects in the image and to obtain confidence levels of the objects; and use detection positions of a preset number of objects whose confidence levels are higher than those of other objects detected in the image to calculate a picture representation according to all pixels in each boundary box.

9. The inspection device (10) according to claim 8, wherein the first neural network (52) is a candidate region-based convolutional neural network or a fast candidate region-based convolutional neural network, and the second neural network (53) is a recurrent neural network or a bidirectional recurrent neural network.

10. The inspection device (10) according to claim 8, wherein the first neural network (52) is trained with a pre-established set of image-semantics pairs.

11. The inspection device (10) according to claim 8, wherein the processor (18) is further configured to, before processing the image using the first neural network (52),
binarize the image of the inspected object (14);
calculate an average value of the binarized image; and
subtract the average value from each pixel value of the binarized image.

12. The inspection device (10) according to claim 8, wherein the processor (18) is further configured to:
calculate a distance between a first vector representing the semantic description and a second vector representing the semantic feature; and
allow the inspected object (14) to pass if the calculated distance is less than a threshold.

13. The inspection device (10) according to claim 8, wherein a correspondence relationship is established between a plurality of region features contained in sample images and a plurality of words included in manifest information of the sample images during the training of the first neural network (52).

14. The inspection device (10) according to claim 13, wherein a dot product between a feature vector representing the region features and a semantic vector representing the words is taken as similarities between the region features and the words, and a weighted sum of the similarities between the plurality of region features of the sample images and the plurality of words included in the manifest information of the sample images is taken as a similarity between the sample images and the manifest information of the sample images.

15. A computer readable medium having stored therein a computer program which, when executed by a processor (18), implements the following steps:
processing an X-ray image of an inspected object (14) using a first neural network (52) to obtain a semantic description of the inspected object (14);
processing text information of a manifest of the inspected object (14) using a second neural network (53) to obtain a semantic feature of the inspected object (14); and
determining whether the inspected object (14) is allowed to pass based on the semantic description and the semantic feature;
**characterized in that**, the first neural network (52) comprises a region convolutional neural network, and the step of processing the X-ray image comprises:
using the region convolutional neural network to detect objects in the image, and to obtain confidence levels of the objects; and using detection positions of a preset number of objects whose confidence levels are higher than those of other objects detected in the image to calculate a picture representation according to all pixels in each boundary box.

## Patentansprüche

1. Inspektionsverfahren, umfassend die Schritte des:
Scannens eines inspizierten Objekts (14) unter Verwendung von Röntgenstrahlen, um ein Bild des inspizierten Objekts (14) zu erhalten,
Verarbeitens des Bilds unter Verwendung eines ersten neuronalen Netzwerks (52), um eine semantische Beschreibung des inspizierten Objekts (14) zu erhalten, Lesens von Textinformationen eines Manifests des inspizierten Objekts (14),
Verarbeitens der Textinformationen des Manifests des inspizierten Objekts (14) unter Verwendung eines zweiten neuronalen Netzwerks (53), um ein semantisches Merkmal des inspizierten Objekts (14) zu erhalten, und
Bestimmens auf der Basis der semantischen Beschreibung und des semantischen Merkmals, ob das inspizierte Objekt (14) passieren darf,
**dadurch gekennzeichnet, dass** das erste neuronale Netzwerk (52) ein neuronales Regionsfaltungsnetzwerk umfasst, und der Schritt des Verarbeitens des Bilds umfasst:
Verwenden des neuronalen Regionsfaltungsnetzwerks, um Objekte in dem Bild zu erkennen und Konfidenzniveaus der Objekte zu erhalten, und Verwenden von Erkennungspositionen einer voreingestellten Anzahl von Objekten, deren Konfidenzniveaus höher als jene von anderen Objekten sind, die in dem Bild erkannt wurden, um eine Bilddarstellung gemäß allen Pixeln in jedem Begrenzungsrahmen zu berechnen.

2. Verfahren nach Anspruch 1, wobei das erste neuronale Netzwerk (52) ein neuronales Faltungsnetzwerk auf Kandidatenregion-Basis oder ein schnelles Faltungsnetzwerk auf Kandidatenregion-Basis ist und das zweite neuronale Netzwerk (53) ein rekurrentes neuronales Netzwerk oder ein bidirektionales rekurrentes neuronales Netzwerk ist.

3. Verfahren nach Anspruch 1, wobei das erste neuronale Netzwerk (52) unter Verwendung eines zuvor ermittelten Satzes von Bild-Semantik-Paaren geschult wird.

4. Verfahren nach Anspruch 1, wobei das Verfahren vor dem Verarbeiten des Bilds unter Verwendung des ersten neuronalen Netzwerks (52) ferner die Schritte umfasst des:
Binarisierens des Bilds des inspizierten Objekts (14),
Berechnens eines Durchschnittswerts des binarisierten Bilds, und
Subtrahierens des Durchschnittswerts von jedem Pixelwert des binarisierten Bilds.

5. Verfahren nach Anspruch 1, wobei der Schritt des Bestimmens auf der Basis der semantischen Beschreibung und des semantischen Merkmals, ob das inspizierte Objekt (14) passieren darf, umfasst:
Berechnen einer Entfernung zwischen einem ersten Vektor, der die semantische Beschreibung darstellt, und einem zweiten Vektor, der das semantische Merkmal darstellt, und
Passierenlassen des inspizierten Objekts (14), wenn die berechnete Entfernung geringer als ein Grenzwert ist.

6. Verfahren nach Anspruch 1, wobei eine Entsprechungsbeziehung zwischen mehreren Regionsmerkmalen, die in Probenbildern enthalten sind, und mehreren Wörtern, die in Manifestinformationen der Probenbilder beinhaltet sind, während einer Schulung des ersten neuronalen Netzwerks (52) ermittelt wird.

7. Verfahren nach Anspruch 6, wobei ein Skalarprodukt zwischen einem Merkmalsvektor, der die Regionsmerkmale darstellt, und einem Semantikvektor, der die Wörter darstellt, als Ähnlichkeiten zwischen den Regionsmerkmalen und den Wörtern genommen wird und eine gewichtete Summe der Ähnlichkeiten zwischen den mehreren Regionsmerkmalen der Probenbilder und den mehreren Wörtern, die in den Manifestinformationen der Probenbilder beinhaltet sind, als eine Ähnlichkeit zwischen den Probenbildern und den Manifestinformationen der Probenbilder genommen wird.

8. Inspektionsvorrichtung (10), umfassend:
ein Scangerät, das dazu ausgestaltet ist, ein inspiziertes Objekt (14) unter Verwendung von Röntgenstrahlen zu scannen, um ein gescanntes Bild zu erhalten,
ein Eingabegerät, das dazu ausgestaltet ist, Informationen eines Manifests des inspizierten Objekts (14) einzugeben, und
einen Prozessor (18), der ausgestaltet ist zum:
Verarbeiten des Bilds unter Verwendung eines ersten neuronalen Netzwerks (52), um eine semantische Beschreibung des inspizierten Objekts (14) zu erhalten,
Verarbeiten von Textinformationen des Manifests des inspizierten Objekts (14) unter Verwendung eines zweiten neuronalen Netzwerks (53), um ein semantisches Merkmal des inspizierten Objekts (14) zu erhalten, und
Bestimmen auf der Basis der semantischen Beschreibung und des semantischen Merkmals, ob das inspizierte Objekt (14) passieren darf,
**dadurch gekennzeichnet, dass** das erste neuronale Netzwerk (52) ein neuronales Regionsfaltungsnetzwerk umfasst, und der Prozessor (18) ferner ausgestaltet ist zum:
Verwenden des neuronalen Regionsfaltungsnetzwerks, um Objekte in dem Bild zu erkennen und Konfidenzniveaus der Objekte zu erhalten, und Verwenden von Erkennungspositionen einer voreingestellten Anzahl von Objekten, deren Konfidenzniveaus höher als jene von anderen Objekten sind, die in dem Bild erkannt wurden, um eine Bilddarstellung gemäß allen Pixeln in jedem Begrenzungsrahmen zu berechnen.

9. Inspektionsvorrichtung (10) nach Anspruch 8, wobei das erste neuronale Netzwerk (52) ein neuronales Faltungsnetzwerk auf Kandidatenregion-Basis oder ein schnelles Faltungsnetzwerk auf Kandidatenregion-Basis ist und das zweite neuronale Netzwerk (53) ein rekurrentes neuronales Netzwerk oder ein bidirektionales rekurrentes neuronales Netzwerk ist.

10. Inspektionsvorrichtung (10) nach Anspruch 8, wobei das erste neuronale Netzwerk (52) mit einem zuvor ermittelten Satz von Bild-Semantik-Paaren geschult wird.

11. Inspektionsvorrichtung (10) nach Anspruch 8, wobei der Prozessor (18) ferner vor dem Verarbeiten des Bilds unter Verwendung des ersten neuronalen Netzwerks (52) dazu ausgestaltet ist,
das Bild des inspizierten Objekts (14) zu binarisieren,
einen Durchschnittswert des binarisierten Bilds zu berechnen, und
den Durchschnittswert von jedem Pixelwert des binarisierten Bilds zu subtrahieren.

12. Inspektionsvorrichtung (10) nach Anspruch 8, wobei der Prozessor (18) ferner ausgestaltet ist zum:
Berechnen einer Entfernung zwischen einem ersten Vektor, der die semantische Beschreibung darstellt, und einem zweiten Vektor, der das semantische Merkmal darstellt, und
Passierenlassen des inspizierten Objekts (14), wenn die berechnete Entfernung geringer als ein Grenzwert ist.

13. Inspektionsvorrichtung (10) nach Anspruch 8, wobei eine Entsprechungsbeziehung zwischen mehreren Regionsmerkmalen, die in Probenbildern enthalten sind, und mehreren Wörtern, die in Manifestinformationen der Probenbilder beinhaltet sind, während der Schulung des ersten neuronalen Netzwerks (52) ermittelt wird.

14. Inspektionsvorrichtung (10) nach Anspruch 13, wobei ein Skalarprodukt zwischen einem Merkmalsvektor, der die Regionsmerkmale darstellt, und einem Semantikvektor, der die Wörter darstellt, als Ähnlichkeiten zwischen den Regionsmerkmalen und den Wörtern genommen wird und eine gewichtete Summe der Ähnlichkeiten zwischen den mehreren Regionsmerkmalen der Probenbilder und den mehreren Wörtern, die in den Manifestinformationen der Probenbilder beinhaltet sind, als eine Ähnlichkeit zwischen den Probenbildern und den Manifestinformationen der Probenbilder genommen wird.

15. Computerlesbares Medium, das ein darin gespeichertes Computerprogramm aufweist, das bei Ausführung durch einen Prozessor (18) die folgenden Schritte implementiert:
Verarbeiten eines Röntgenbilds eines inspizierten Objekts (14) unter Verwendung eines ersten neuronalen Netzwerks (52), um eine semantische Beschreibung des inspizierten Objekts (14) zu erhalten,
Verarbeiten von Textinformationen eines Manifests des inspizierten Objekts (14) unter Verwendung eines zweiten neuronalen Netzwerks (53), um ein semantisches Merkmal des inspizierten Objekts (14) zu erhalten, und
Bestimmen auf der Basis der semantischen Beschreibung und des semantischen Merkmals, ob das inspizierte Objekt (14) passieren darf,
**dadurch gekennzeichnet, dass** das erste neuronale Netzwerk (52) ein neuronales Regionsfaltungsnetzwerk umfasst, und der Schritt des Verarbeitens des Röntgenbilds umfasst:
Verwenden des neuronalen Regionsfaltungsnetzwerks, um Objekte in dem Bild zu erkennen und Konfidenzniveaus der Objekte zu erhalten, und Verwenden von Erkennungspositionen einer voreingestellten Anzahl von Objekten, deren Konfidenzniveaus höher als jene von anderen Objekten sind, die in dem Bild erkannt wurden, um eine Bilddarstellung gemäß allen Pixeln in jedem Begrenzungsrahmen zu berechnen.

## Revendications

1. Procédé d'inspection, comprenant des étapes de :
balayage d'un objet inspecté (14) à l'aide de rayons X pour obtenir une image de l'objet inspecté (14) ;
traitement de l'image à l'aide d'un premier réseau neuronal (52) pour obtenir une description sémantique de l'objet inspecté (14) ;
lecture d'une information de texte d'un manifeste de l'objet inspecté (14) ;
traitement de l'information de texte du manifeste de l'objet inspecté (14) à l'aide d'un second réseau neuronal (53) pour obtenir une caractéristique sémantique de l'objet inspecté (14) ; et
fait de déterminer si l'objet inspecté (14) est autorisé à passer sur la base de la description sémantique et de la caractéristique sémantique,
**caractérisé en ce que**, le premier réseau neuronal (52) comprend un réseau neuronal à convolution de région, et l'étape de traitement de l'image comprend :
l'utilisation du réseau neuronal à convolution de région pour détecter des objets dans l'image et pour obtenir des niveaux de confiance des objets ; et l'utilisation de positions de détection d'un nombre prédéfini d'objets dont les niveaux de confiance sont supérieurs à ceux d'autres objets détectés dans l'image pour calculer une représentation de photographie en fonction de tous les pixels dans chaque zone de contour.

2. Procédé selon la revendication 1, dans lequel le premier réseau neuronal (52) est un réseau neuronal à convolution basé sur une région candidate ou un réseau neuronal à convolution basé sur une région candidate rapide, et le second réseau neuronal (53) est un réseau neuronal récurrent ou un réseau neuronal récurrent bidirectionnel.

3. Procédé selon la revendication 1, dans lequel le premier réseau neuronal (52) est entraîné à l'aide d'un ensemble préétabli de paires image-sémantiques.

4. Procédé selon la revendication 1, dans lequel avant le traitement de l'image à l'aide du premier réseau neuronal (52), le procédé comprend en outre des étapes de :
binarisation de l'image de l'objet inspecté (14) ;
calcul d'une valeur moyenne de l'image binarisée ; et
soustraction de la valeur moyenne depuis chaque valeur de pixel de l'image binarisée.

5. Procédé selon la revendication 1, dans lequel les étapes de fait de déterminer si l'objet inspecté (14) est autorisé à passer sur la base de la description sémantique et de la caractéristique sémantique comprend :
le calcul d'une distance entre un premier vecteur représentant la description sémantique et un second vecteur représentant la caractéristique sémantique ; et
l'autorisation donnée à l'objet inspecté (14) de passer si la distance calculée est inférieure à un seuil.

6. Procédé selon la revendication 1, dans lequel une relation de correspondance est établie entre une pluralité de caractéristiques de région contenues dans des échantillons d'image et une pluralité de mots inclus dans une information de manifeste des échantillons d'image pendant l'entraînement du premier réseau neuronal (52).

7. Procédé selon la revendication 6, dans lequel un produit scalaire entre un vecteur de caractéristique représentant les caractéristiques de région et un vecteur sémantique représentant les mots est considéré comme des similarités entre les caractéristiques de région et les mots, et une somme pondérée des similarités entre la pluralité de caractéristiques de région des échantillons d'image et la pluralité de mots inclus dans l'information de manifeste des échantillons d'image est considérée comme une similarité entre les échantillons d'image et l'information de manifeste des échantillons d'image.

8. Dispositif d'inspection (10), comprenant :
un appareil de balayage configuré pour balayer un objet inspecté (14) à l'aide de rayons X afin d'obtenir une image balayée par scanner ;
un appareil d'entrée configuré pour entrer une information sur un manifeste de l'objet inspecté (14) ; et
un processeur (18) configuré pour :
traiter l'image à l'aide d'un premier réseau neuronal (52) afin d'obtenir une description sémantique de l'objet inspecté (14) ;
traiter l'information de texte du manifeste de l'objet inspecté (14) à l'aide d'un second réseau neuronal (53) afin d'obtenir une caractéristique sémantique de l'objet inspecté (14) ; et
déterminer si l'objet inspecté (14) est autorisé à passer sur la base de la description sémantique et de la caractéristique sémantique,
**caractérisé en ce que**, le premier réseau neuronal (52) comprend un réseau neuronal à convolution de région, et le processeur (18) est en outre configuré pour :
utiliser le réseau neuronal à convolution de région afin de détecter des objets dans l'image et afin d'obtenir des niveaux de confiance des objets ; et utiliser des positions de détection d'un nombre prédéfini d'objets dont les niveaux de confiance sont supérieurs à ceux d'autres objets détectés dans l'image en vue de calculer une représentation de photographie en fonction de tous les pixels dans chaque zone de contour.

9. Dispositif d'inspection (10) selon la revendication 8, dans lequel le premier réseau neuronal (52) est un réseau neuronal à convolution basé sur une région candidate ou un réseau neuronal à convolution basé sur une région candidate rapide, et le second réseau neuronal (53) est un réseau neuronal récurrent ou un réseau neuronal récurrent bidirectionnel.

10. Dispositif d'inspection (10) selon la revendication 8, dans lequel le premier réseau neuronal (52) est entraîné avec un ensemble préétabli de paires image-sémantiques.

11. Dispositif d'inspection (10) selon la revendication 8, dans lequel le processeur (18) est en outre configuré pour, avant de traiter l'image à l'aide du premier réseau neuronal (52),
binariser l'image de l'objet inspecté (14) ;
calculer une valeur moyenne de l'image binarisée ; et soustraire la valeur moyenne depuis chaque valeur de pixel de l'image binarisée.

12. Dispositif d'inspection (10) selon la revendication 8, dans lequel le processeur (18) est en outre configuré pour :
calculer une distance entre un premier vecteur représentant la description sémantique et un second vecteur représentant la caractéristique sémantique ; et
autoriser l'objet inspecté (14) à passer si la distance calculée est inférieure à un seuil.

13. Dispositif d'inspection (10) selon la revendication 8, dans lequel une relation de correspondance est établie entre une pluralité de caractéristiques de région contenues dans des échantillons d'image et une pluralité de mots inclus dans une information de manifeste des échantillons d'image pendant l'entraînement du premier réseau neuronal (52).

14. Dispositif d'inspection (10) selon la revendication 13, dans lequel un produit scalaire entre un vecteur de caractéristique représentant les caractéristiques de région et un vecteur sémantique représentant les mots est considéré comme des similarités entre les caractéristiques de région et les mots, et une somme pondérée des similarités entre la pluralité de caractéristiques de région des échantillons d'image et la pluralité de mots inclus dans l'information de manifeste des échantillons d'image est considérée comme une similarité entre les échantillons d'image et l'information de manifeste des échantillons d'image.

15. Support lisible par ordinateur présentant stocké en celui-ci un programme d'ordinateur qui, lorsqu'il est exécuté par un processeur (18), met en oeuvre les étapes suivantes :
traitement d'une image radiologique d'un objet inspecté (14) à l'aide d'un premier réseau neuronal (52) pour obtenir une description sémantique de l'objet inspecté (14) ;
traitement d'une information de texte d'un manifeste de l'objet inspecté (14) à l'aide d'un second réseau neuronal (53) pour obtenir une caractéristique sémantique de l'objet inspecté (14) ; et
fait de déterminer si l'objet inspecté (14) est autorisé à passer sur la base de la description sémantique et de la caractéristique sémantique ;
**caractérisé en ce que**, le premier réseau neuronal (52) comprend un réseau neuronal à convolution de région, et l'étape de traitement de l'image radiologique comprend :
l'utilisation du réseau neuronal à convolution de région pour détecter des objets dans l'image, et pour obtenir des niveaux de confiance des objets ; et l'utilisation de positions de détection d'un nombre prédéfini d'objets dont les niveaux de confiance sont supérieurs à ceux d'autres objets détectés dans l'image pour calculer une représentation de photographie en fonction de tous les pixels dans chaque zone de contour.
